# EUROPÄISCHE PATENTSCHRIFT

(11) **EP 1 330 631 B1**
(45) Veröffentlichungstag und Bekanntmachung des Hinweises auf die Patenterteilung: **11.02.2009**
(21) Anmeldenummer: 01972044.0
(22) Anmeldetag: 11.09.2001
(51) Int. Cl.: G01D 5/347

(54) **POSITIONSMESSEINRICHTUNG**
POSITION MEASURING DEVICE
DISPOSITIF DE MESURE DE POSITION

(30) Priorität: 20.09.2000 DE 10046818
(43) Veröffentlichungstag der Anmeldung: 30.07.2003
(73) Patentinhaber: Dr. Johannes Heidenhain GmbH, 83292 Traunreut (DE)
(72) Erfinder: MITTERREITER, Johann, 83339 Chieming (DE)
(86) Internationale Anmeldenummer: PCT/EP2001/010472
(87) Internationale Veröffentlichungsnummer: WO 2002/025218

(56) Entgegenhaltungen:
- EP-A- 1 099 937
- GB-A- 784 572
- US-A- 2 859 084
- US-A- 4 351 207
- US-A- 4 870 272

## Beschreibung

Die Erfindung betrifft eine Positionsmesseinrichtung gemäß dem Oberbegriff des Anspruches 1.

Eine derartige Positionsmesseinrichtung ist aus der DE 43 17 022 C1 bekannt. Die Lage einer Abtasteinheit gegenüber einer Teilscheibe wird mittels eines Verstellelementes einer Justiervorrichtung justiert, indem das Verstellelement in Form einer Schraube an einem Hebel eines Untersetzungsmechanismus angreift und die Abtasteinheit untersetzt verstellt. Diese Verstellbewegung ist eine Verschwenkbewegung um ein Biegegelenk der Justiervorrichtung.

Gemäß der DE 28 44 066 A1, der US 4 870 272 A und der DE 40 01 848 C1 erfolgt die Verstellung ebenfalls über einen Hebel, welcher die Abtasteinheit um ein Biegegelenk verschwenkt.

In der Praxis werden aber auch lineare Verstellbewegungen der Abtasteinheit gegenüber der Maßverkörperung gefordert, wie beispielsweise in der EP 0 158 066 A1 erläutert ist. Zur Justierung von vier räumlich gegeneinander versetzt angeordneten Lichtschranken einer Abtasteinheit einer Winkelmesseinrichtung ist die Abtasteinheit über Langlöcher in radialer Richtung verschiebbar. Diese radiale Verschiebung wird dort Parallelverschiebung genannt und erfolgt über zwei Langlöcher. Damit ist aber keine Feinjustierung möglich.

Aufgabe der Erfindung ist es daher, eine Positionsmesseinrichtung mit einer Justiervorrichtung anzugeben, mit der die Abtasteinheit gegenüber der Maßverkörperung hochgenau linear verstellt werden kann.

Diese Aufgabe wird erfindungsgemäß durch eine Positionsmesseinrichtung mit den Merkmalen des Anspruches 1 gelöst.

Der mit der Erfindung erzielte Vorteil besteht darin, dass die Abtasteinheit mit einer einfachen Vorrichtung hochgenau linear verstellt werden kann. Die Verstellbewegung eines Verstellelementes wird untersetzt in eine lineare Verstellbewegung der Abtasteinheit übertragen, wodurch eine feinfühlige Einstellung ermöglicht wird. Ferner kann eine geringe Baugröße realisiert werden.

Vorteilhafte Ausführungen sind in den abhängigen Ansprüchen angegeben.

Anhand von Ausführungsbeispielen wird die Erfindung nachfolgend noch näher erläutert. Es zeigt
- Figur 1: eine Draufsicht einer Winkelmesseinrichtung mit einer Justiervorrichtung,
- Figur 2: die Justiervorrichtung gemäß Figur 1 vergrößert dargestellt,
- Figur 3: die Justiervorrichtung in einer weiteren Justierstellung,
- Figur 4: eine zweite Ausführungsform der Justiervorrichtung,
- Figur 5: ein drittes Ausführungsbeispiel der Justiervorrichtung,
- Figur 6: ein viertes Ausführungsbeispiel der Justiervorrichtung,
- Figur 7: ein fünftes Ausführungsbeispiel der Justiervorrichtung.

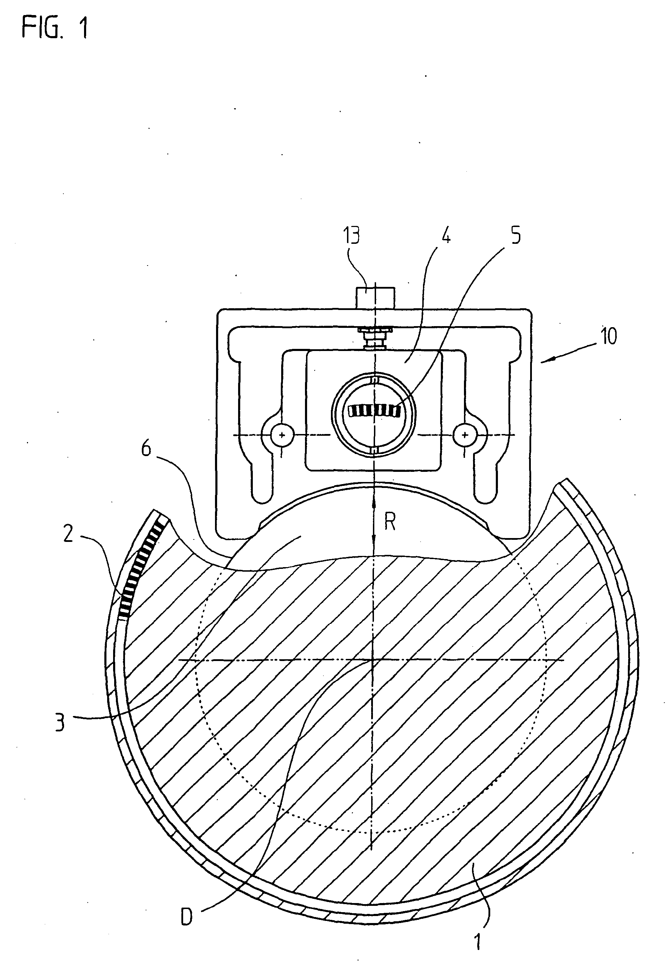

Die Winkelmesseinrichtung nach Figur 1 besteht aus einer Teilscheibe 1, welche um die Drehachse D drehbar gelagert ist. Die Teilscheibe 1 trägt als Maßverkörperung eine inkrementale Winkelteilung 2, deren Teilstriche radial ausgerichtet sind. Zur Messung der Drehstellung der Teilscheibe 1 gegenüber einem Stator 3 ist eine Abtasteinheit 4 am Stator 3 justierbar befestigt.

Die Abtasteinheit 4 ist in bekannter Weise aufgebaut, so dass in Figur 1 zur Erläuterung nur das Abtastgitter 5 der Abtasteinheit 4 dargestellt ist.

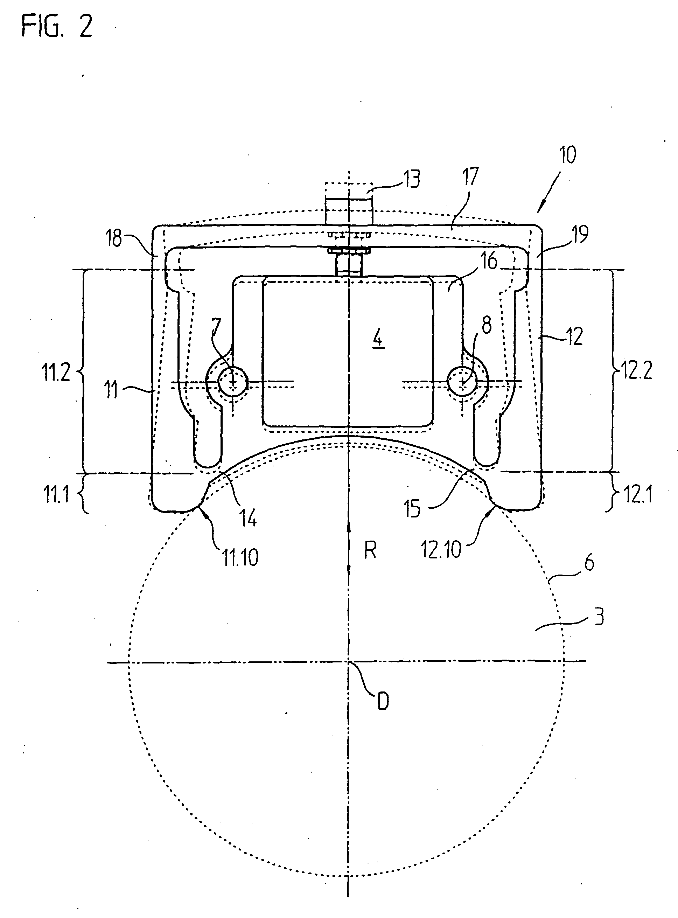

Die Abtasteinheit 4 ist an einem Träger 16 einer Justiervorrichtung 10 angebracht. Die Justiervorrichtung 10 weist zwei Hebel 11 und 12 mit Anschlagflächen 11.10 und 12.10 auf. Diese Anschlagflächen 11.10 und 12.10 dienen in bekannter Weise (DE 32 28 507 C2) zur Zuordnung der Abtasteinheit 4 gegenüber der Teilscheibe 1. Hierzu ist am Stator 3, in der die Teilscheibe 1 gelagert ist, ein zur Drehachse D konzentrisch verlaufender Zentrierbund 6 vorgesehen, an dem die Justiervorrichtung 10 mit den Anschlagflächen 11.10 und 12.10 in Kontakt gebracht wird. Der Durchmesser des Zentrierbundes 6 ist toleranzbehaftet, so dass die radiale Lage der Abtasteinheit 4 durch den Zentrierbund 6 nicht immer den Anforderungen entspricht. Zum Ausgleich von Durchmessertoleranzen des Zentrierbundes 6 muss die Abtasteinheit 4 ausschließlich radial ohne Änderung der Fluchtung zur Drehachse D (Richtung R) linear verstellt werden. Diese lineare Verstellung erfolgt mit der Justiervorrichtung 10 und wird anhand der Figur 2 weiter erläutert.

Wie in Figur 2 vergrößert dargestellt ist, besteht die Justiervorrichtung 10 aus einem symmetrisch aufgebauten Hebelgetriebe mit zwei Hebeln 11, 12, die mit einem gemeinsamen Verstellelement 13 jeweils um ein Biegegelenk 14, 15 verschwenkbar sind. Die Biegegelenke 14, 15 sind zwischen dem Träger 16 der Abtasteinheit 4 und den Hebeln 11, 12 angeordnet und in Form von Schwachstellengelenken ausgebildet, so dass die Justiervorrichtung 10 einstückig gefertigt werden kann.

Jeder der beiden Hebel 11,12 weist einen vom Biegegelenk 14, 15 ausgehenden kurzen Hebelarm 11.1, 12.1 und einen längeren Hebelarm 11.2, 12.2 auf. An den beiden längeren Hebelarmen 11.2, 12.2 greift das gemeinsame Verstellelement 13 an, mit dem die beiden längeren Hebelarme 11.2, 12.2 gegensinnig um die Biegegelenke 14, 15 verschwenkt werden. An den kürzeren Hebelarmen 11.1, 12.1 sind die Anschlagflächen 11.10, 12.10 angeformt. Die Bewegung des Verstellelementes 13 wird über die beiden Hebel 11, 12 untersetzt in eine gegensinnig gerichtete Bewegung der beiden Anschlagflächen 11.10, 12.10 umgesetzt. Indem die Anschlagflächen 11.10, 12.10 mit dem Zentrierbund 6 in Kontakt gehalten wird, bewegt sich der Träger 16 und somit die Abtasteinheit 4 bei Betätigung des Verstellelementes 13 linear in radialer Richtung R.

Besonders vorteilhaft ist es, wenn die beiden Hebelarme 11.2, 12.2 über ein gemeinsames Joch 17 miteinander verbunden sind, an dem das Verstellelement 13 angreift. Das Joch 17 verbindet die beiden langen Hebelarme 11.2, 12.2 einstückig miteinander und es ist als Biegebalken bzw. Deformationsglied ausgebildet. In der Mitte des Joches 17 greift das Verstellelement in Form einer Schraube 13 an und verbiegt das Joch 17 in radialer Richtung R. Die Schraube 13 stützt sich dabei am Träger 16 ab. Die Verbiegung des Joches 17 verursacht eine Verkürzung des Joches 17 und somit eine Verschwenkung der beiden Hebel 11 und 12 in entgegengesetzte Richtungen um jeweils gleiche Wege. Zur Einleitung der Schwenkbewegung auf die Hebel 11, 12 ist es vorteilhaft, wenn zwischen dem Joch 17 und den längeren Hebelarmen 11.2 und 12.2 jeweils ein Biegegelenk 18, 19 angeordnet ist.

Ist die radiale Lage der Abtasteinheit 4 durch die Justiervorrichtung 10 mit dem Untersetzungsmechanismus, bestehend aus den Hebeln 11, 12 und den Biegegelenken 14, 15 korrekt eingestellt, wird diese über nicht dargestellte Befestigungselemente am Stator 3 fixiert. In Figur 2 sind schematisch die hierfür vorgesehenen Befestigungsbohrungen 7, 8 dargestellt.

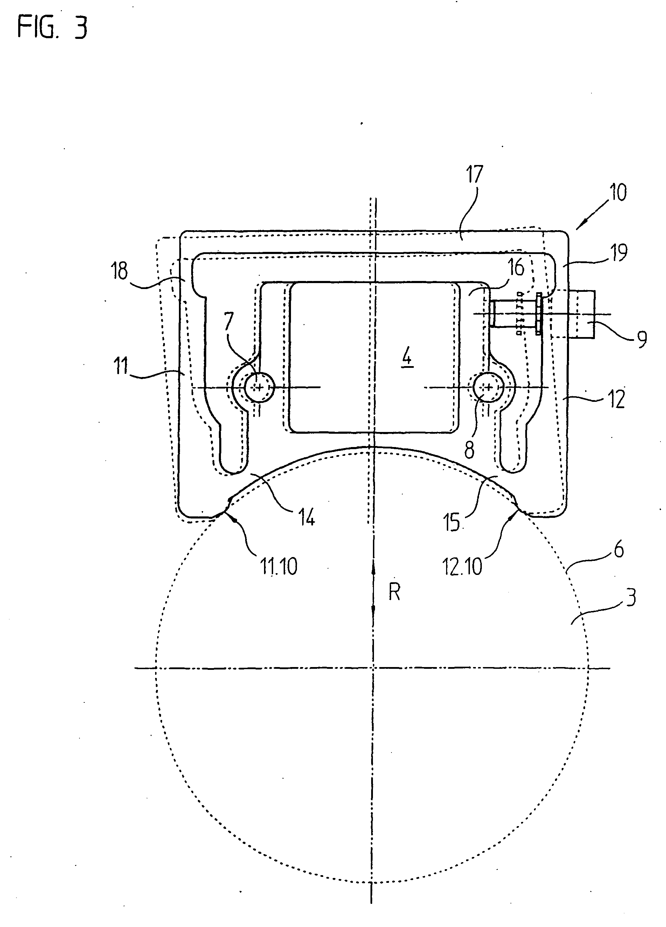

Mit der Justiervorrichtung 10 ist auch eine Verstellung der Abtasteinheit 4 quer zur radialen. Richtung R möglich. Hierzu ist ein weiteres Verstellelement 9 vorgesehen, das an einem der beiden längeren Hebelarme 11.2, 12.2 angreift und diesen quer zur radialen Richtung R auslenkt. Dieses Ausführungsbeispiel ist in Figur 3 dargestellt.

In den Figuren 2 und 3 sind die Hebel 11, 12 in nicht ausgelenkter Stellung in durchgezogenen Linien und in ausgelenkter Stellung, also in justierter Lage, in gestrichelten Linien dargestellt.

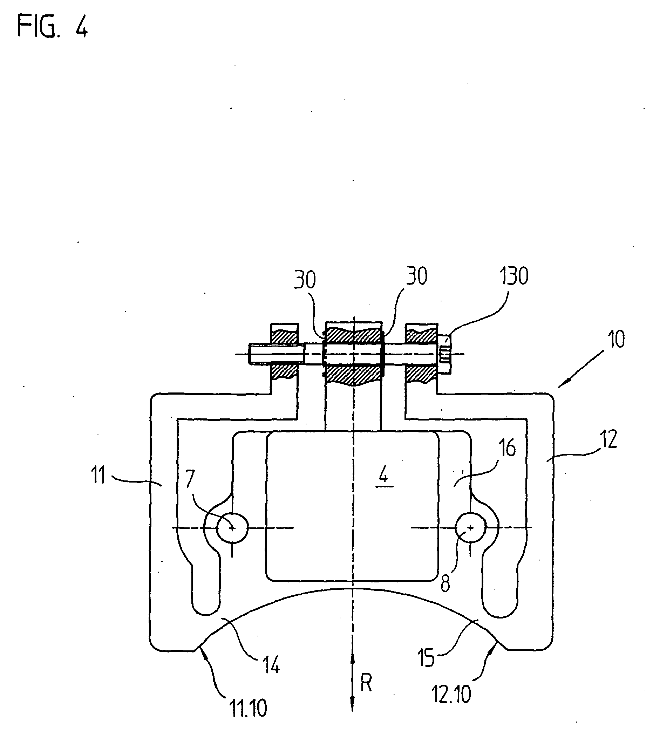

Alternativ zu dem Joch 17 in Form eines Deformationsgliedes kann die Kopplung der beiden Hebel 11, 12 mit einem Verstellelement 130 gemäß Figur 4 ausgeführt sein. Zum gegensinnigen Verschwenken der beiden Hebel 11, 12 sind diese gemeinsam über die Schraube 130 verbunden. Bei Verdrehung der Schraube 130 bewegen sich die beiden Hebel 11, 12 gegensinnig um gleiche Wege.

Soll nur einer der beiden Hebel 11,12 verschwenkt werden, muss sich die Schraube 130 an einem Teil des Stators 3 (Stator 3 in Figur 3 dargestellt) oder am Träger 16 abstützen, was durch den Sicherungsring 30 angedeutet ist.

Das Verstellelement 13 gemäß Figur 3 kann in nicht gezeigter Weise anstelle der Schraube auch ein Exzenter sein, dessen exzentrische Oberfläche zur Verbiegung des Joches 17 mit diesem in Kontakt steht oder zur Auslenkung nur eines Hebels 11, 12 mit diesem in Kontakt steht. Bei dem Ausführungsbeispiel gemäß Figur 4 kann die gegensinnige Verlagerung der beiden Hebel 11, 12 auch durch einen Keil bewirkt werden, der gleichzeitig an den beiden Hebeln 11, 12 angreift.

Bei den bisher erläuterten Ausführungsbeispielen muss bei der Justierung die gesamte Justiervorrichtung 10 mit der Abtasteinheit 4 an den Zentrierbund 6 nachgerückt werden. Bei den nachfolgend erläuterten Ausführungsbeispielen kann die Justiervorrichtung 10 über ein stationäres Teil 20 starr am Stator 3 fixiert werden und die Abtasteinheit 4 gegenüber diesem fixierten Teil 20 der Justiervorrichtung 10 eingestellt werden. Hierzu wird die Justiervorrichtung 10 mit den Anschlagflächen 11.10, 12.10 am Zentrierbund 6 ausgerichtet und fixiert. Zur Fixierung am Stator 3 sind die Befestigungsbohrungen 27 und 28 vorgesehen.

Der Träger 16 der Abtasteinheit 4 ist über einen Untersetzungsmechanismus analog den bereits erläuterten Ausführungsbeispielen relativ zum stationären Teil 20 in radialer Richtung R verstellbar. Gleichwirkende Teile sind bei allen Ausführungsbeispielen mit gleichen Bezugszeichen versehen.

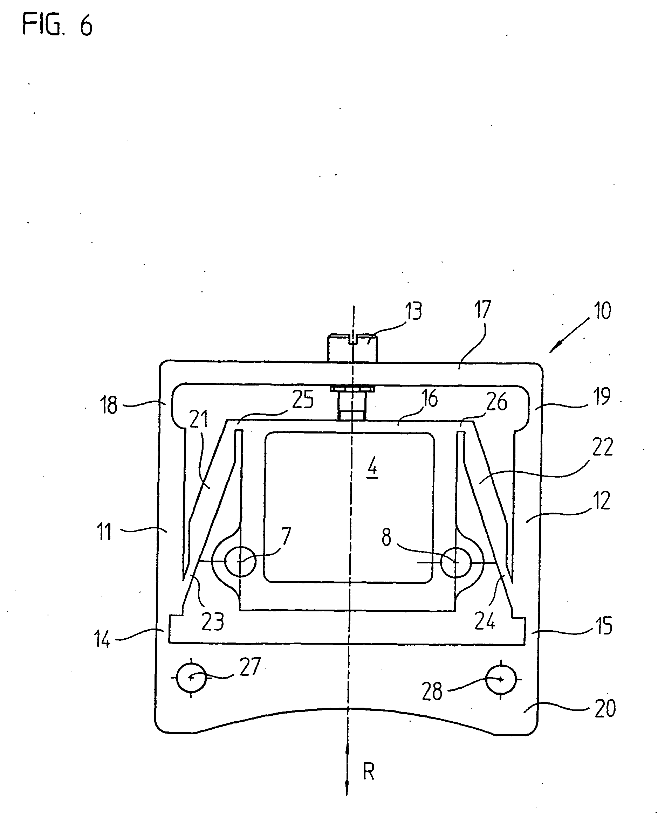

Der Untersetzungsmechanismus besteht wiederum aus einer spiegelsymmetrisch aufgebauten Hebelanordnung mit zwei Hebeln 11, 12, die mittels eines Verstellelementes 13 entgegengesetzt verschwenkbar sind. Die Hebel 11, 12 sind über Biegegelenke 14, 15 am stationären Teil 20 angelenkt und über ein gemeinsames Joch 17 miteinander verbunden. Das Joch 17 ist wiederum ein Deformationsglied, an dessen Mitte das Verstellelement 13 angreift. Bei einer mittigen Verbiegung des Deformationsgliedes verkürzt sich die gemeinsame Verbindung der beiden Hebel 11, 12, was zu einer Auslenkung der beiden Hebel 11, 12 um gleiche Wege in entgegengesetzte Richtungen führt. Das Verstellelement 13 kann sich dabei am Stator 3 oder gemäß Figur 6 am Träger 16 abstützen.

Die Schwenkbewegung der beiden Hebel 11, 12 wird untersetzt auf den Träger 16 mit der Abtasteinheit 4 übertragen. Die vom langen Hebelarm 11.2 und 12.2 ausgeführte Schwenkbewegung wird auf den kürzeren Hebelarm 11.1 und 12.1 übertragen. Die weitere Übertragung erfolgt mittels jeweils eines Lenkers 21, 22 in Form einer Schubstange, die einerseits am kurzen Hebelarm 11.1, 12.1 und andererseits am Träger 16 befestigt ist. Jeder Lenker 21, 22 ist einerseits am kurzen Hebelarm 11.1, 12.1 über ein Biegegelenk 23, 24 und andererseits am Träger 16 über ein weiteres Biegegelenk 25, 26 befestigt. Die Lenker 21, 22 übertragen die Schwenkbewegung der beiden Hebel 11, 12 in eine lineare Verstellbewegung des Trägers 16 in ausschließlich radialer Richtung R. Die Abtasteinheit 4 ist somit über die beiden Befestigungsstellen in Form von Biegegelenken 25, 26 mit der Hebelanordnung 11, 12 und den Lenkern 21, 22 gekoppelt. Die Schwenkbewegung der Hebel 11, 12 wird durch die Lenker 21, 22 in eine Parallelverschiebung der beiden Befestigungsstellen umgesetzt.

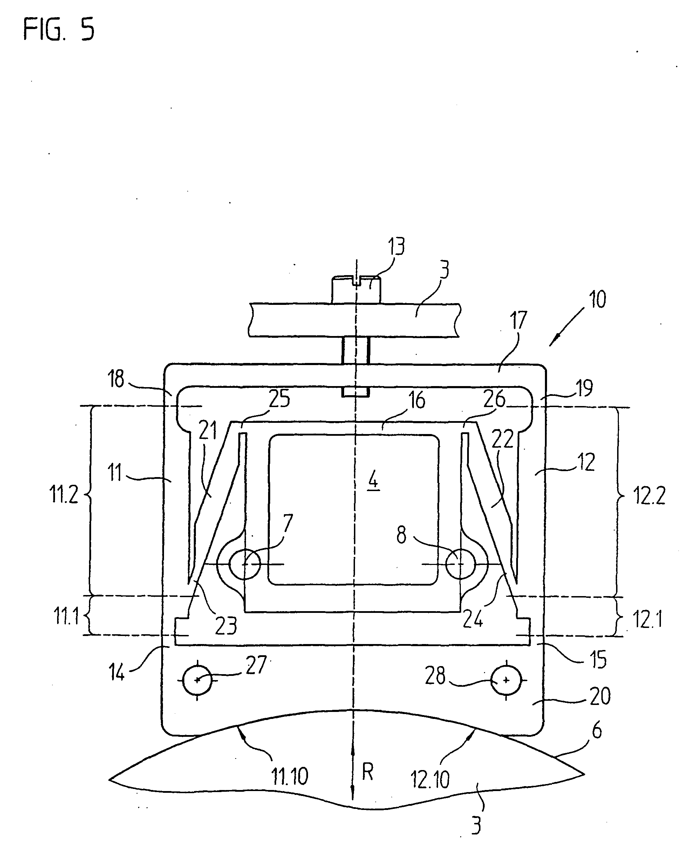

Auch die Justiervorrichtungen gemäß Figur 5 und 6 erlauben zusätzlich eine Justierung der Abtasteinheit in einer Richtung quer zur radialen Richtung R, indem - wie in Figur 3 dargestellt - ein weiteres Verstellelement 9 nur an einem der beiden Hebel 11, 12 angreift.

Nach erfolgter Justierung wird die Abtasteinheit 4 am Stator 3 fixiert. Hierzu sind am Träger 16 Befestigungsbohrungen 7, 8 vorgesehen.

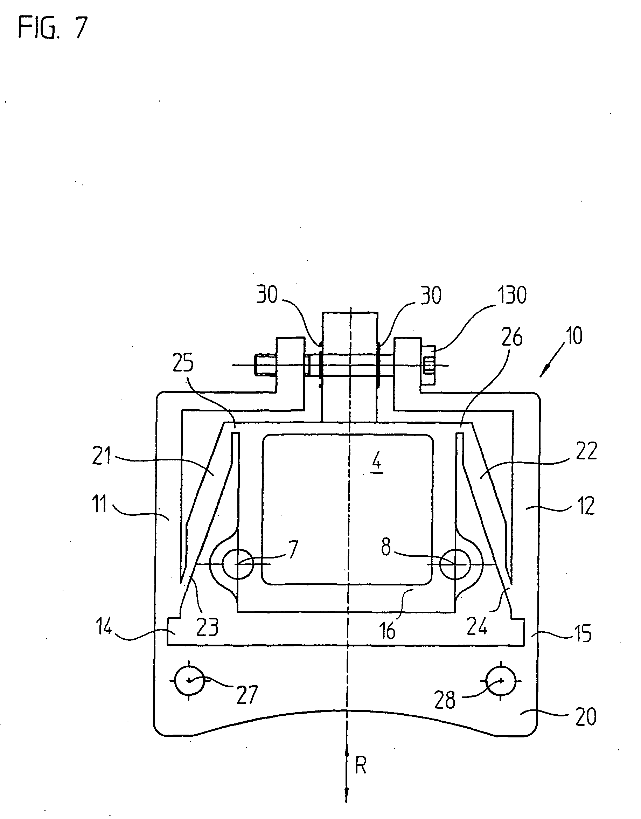

Analog zu dem Ausführungsbeispiel gemäß Figur 4 können die beiden Hebel 11, 12 auch über eine gemeinsame Schraube 130 miteinander gekoppelt sein, wie in Figur 7 dargestellt ist.

Besonders vorteilhaft ist es, wenn alle Hebel 11, 12 und Biegegelenke 14, 15, 18, 19, 23 bis 26 des Untersetzungsmechanismus sich in einer gemeinsamen Ebene befinden und einstückig ausgebildet sind. Die Drehachsen der Biegegelenke 14, 15, 18, 19, 23 bis 26 sind parallel zueinander ausgerichtet.

Die erfindungsgemäße Vorrichtung kann auch dazu eingesetzt werden, die Abtasteinheit in anderen geradlinigen Bewegungsrichtungen, z.B. zur Einstellung des Abtastabstandes zwischen Teilung 2 und Abtastgitter 5, zu justieren. Die Erfindung ist weiterhin nicht auf die beschriebene Winkelmesseinrichtung beschränkt. Die Maßverkörperung kann anstelle einer Teilscheibe 1 auch nur ein Sektor oder auch ein linearer Maßstab sein. Die Maßverkörperung kann lichtelektrisch, kapazitiv, magnetisch oder induktiv abtastbar ausgebildet sein. Die Teilung kann eine inkrementale periodische Teilung oder eine absolute einspurige oder mehrspurige Codierung sein.

## Patentansprüche

1. Positionsmesseinrichtung mit
- einer Maßverkörperung (2);
- einer Abtasteinheit (4) zur Abtastung der Maßverkörperung (2);
- einer Justiervorrichtung (10) mit einem Verstellelement (13, 130) zur Einstellung der Lage der Abtasteinheit (4) gegenüber der Maßverkörperung (2), wobei zwischen dem Verstellelement (13, 130) und der Abtasteinheit (4) ein Untersetzungsmechanismus angeordnet ist, welcher eine Verstellbewegung des Verstellelementes (13, 130) in eine kürzere Verstellbewegung der Abtasteinheit (4) umsetzt, **dadurch gekennzeichnet, dass**
- der Untersetzungsmechanismus eine Hebelanordnung (11, 12) mit Gelenken (14, 15, 18, 19, 21, 22, 23, 24) aufweist, welche die Verstellbewegung des Verstellelementes (13, 130) in eine lineare Verstellbewegung der Abtasteinheit (4) relativ zur Maßverkörperung (2) umsetzt.

2. Positionsmesseinrichtung nach Anspruch 1, **dadurch gekennzeichnet, dass** das Verstellelement (13, 130) gleichzeitig an zwei Hebeln (11, 12) angreift, und jeder der beiden Hebel (11, 12) jeweils um ein Biegegelenk (14, 15) verschwenkbar gelagert ist.

3. Positionsmesseinrichtung nach Anspruch 2, **dadurch gekennzeichnet, dass** die beiden Hebel (11, 12) über ein Joch (17) miteinander gekoppelt sind, an dem das gemeinsame Verstellelement (13) angreift, wobei bei Betätigung des Verstellelementes (13, 130) die beiden Hebel (11, 12) gegensinnig verschwenkbar sind.

4. Positionsmesseinrichtung nach Anspruch 3, **dadurch gekennzeichnet, dass** das Joch (17) ein Deformationsglied ist, das einstückig an die beiden Hebel (11, 12) angeformt ist.

5. Positionsmesseinrichtung nach einem der vorhergehenden Ansprüche, **dadurch gekennzeichnet, dass** die Justiervorrichtung (10) voneinander beabstandete Anschlagflächen (11.10, 12.10) aufweist, mit denen die Abtasteinheit (4) gegenüber der Maßverkörperung (2) ausrichtbar ist, und dass diese Anschlagflächen (11.10, 12.10) über die Hebelanordnung (11, 12) mittels eines gemeinsamen Verstellelementes (13, 130) verstellbar sind.

6. Positionsmesseinrichtung nach Anspruch 5, **dadurch gekennzeichnet, dass** die Maßverkörperung eine Winkelteilung (2) ist, die in einem Stator (3) um eine Drehachse (D) drehbar gelagert ist und am Stator (3) ein zur Drehachse (D) konzentrisch verlaufender Zentrierbund (6) angeordnet ist, an der die Justiervorrichtung (10) mittels zweier Anschlagflächen (11.10, 12.10) anliegt und die Hebelanordnung (11, 12) zwischen dem Verstellelement (13, 130) und den Anschlagflächen (11.10, 12.10) zur Verlagerung der Anschlagflächen (11.10, 12.10) angeordnet ist.

7. Positionsmesseinrichtung nach Anspruch 6, **dadurch gekennzeichnet, dass** die Hebelanordnung zwei Hebel (11, 12) umfasst, die durch Einwirkung des Verstellelementes (13, 130) jeweils um ein Biegegelenk (14, 15) gegensinnig verschwenkbar sind, wobei eines der Biegegelenke (14, 15) jeweils zwischen der Abtasteinheit (4) und einem der Hebel (11, 12) angeordnet ist.

8. Positionsmesseinrichtung nach Anspruch 7, **dadurch gekennzeichnet, dass** jeder der beiden Hebel (11, 12) einen vom Biegegelenk (14, 15) ausgehenden kurzen Hebelarm (11.1, 12.1) und einen vom Biegegelenk (14, 15) ausgehenden längeren Hebelarm (11.2, 12.2) aufweist, wobei am längeren Hebelarm (11.2, 12.2) das Verstellelement (13, 130) angreift und am kürzeren Hebelarm (11.1, 12.1) eine der Anschlagflächen (11.10, 12.10) angeordnet ist.

9. Positionsmesseinrichtung nach einem der Ansprüche 1 bis 4, **dadurch gekennzeichnet, dass** die Justiervorrichtung (10) ein stationäres Teil (20) aufweist, an dem die Abtasteinheit (4) über Biegegelenke (25, 26) verstellbar angekoppelt ist, und die Biegegelenke (25, 26) an der Abtasteinheit (4) über die Hebelanordnung (11, 12) parallel zueinander verschiebbar sind.

10. Positionsmesseinrichtung nach Anspruch 9, **dadurch gekennzeichnet, dass** die Hebelanordnung aus zwei Hebeln (11, 12) besteht, wobei jeweils ein Hebel (11, 12) an einem der Biegegelenke (25, 26) der Abtasteinheit (4) angreift, und die beiden Hebel (11, 12) über das Verstellelement (13, 130) gemeinsam verschwenkbar sind.

11. Positionsmesseinrichtung nach Anspruch 10, **dadurch gekennzeichnet, dass** die beiden Hebel (11, 12) mit einem Lenker (21, 22) gekoppelt sind, der die Schwenkbewegung der Hebel (11, 12) in eine Parallelbewegung der Biegegelenke (25, 26) der Abtasteinheit (4) umsetzt.

12. Positionsmesseinrichtung nach Anspruch 11, **dadurch gekennzeichnet, dass** die Lenker (21, 22) jeweils über das Biegegelenk (25, 26) an der Abtasteinheit (4) angekoppelt sind und über ein weiteres Biegegelenk (23, 24) am Hebel (11, 12) angekoppelt sind.

## Claims

1. Position measuring device, comprising
- a material measure (2);
- a scanning unit (4) for scanning the material measure (2);
- an alignment device (10) comprising a adjusting element (13, 130) for adjusting the position of the scanning unit (4) relative to the material measure (2), between the adjusting element (13, 130) and the scanning unit (4) a reduction mechanism being arranged, which converts an adjusting movement of the adjusting element (13, 130) into a shorter adjusting movement of the scanning unit (4), **characterised in that**
- the reduction mechanism comprises a lever arrangement (11, 12) with joints (14, 15, 18, 19, 21, 22, 23, 24), which converts the adjusting movement of the adjusting element (13, 130) into a linear adjusting movement of the scanning unit (4) relative to the material measure (2).

2. Position measuring device according to Claim 1, **characterised in that** the adjusting element (13, 130) simultaneously acts on two levers (11, 12) and each of the two levers (11, 12) is respectively pivotably mounted about a flexible joint (14, 15).

3. Position measuring device according to Claim 2, **characterised in that** the two levers (11, 12) are coupled to one another via a yoke (17), on which the common adjusting element (13) acts, the two levers (11, 12) being able to be pivoted in opposing directions when the adjusting element (13, 130) is actuated.

4. Position measuring device according to claim 3, **characterised in that** the yoke (17) is a deformation member which is integrally formed on the two levers (11, 12).

5. Position measuring device according to one of the preceding claims, **characterised in that** the alignment device (10) comprises stop faces (11.10, 12.10) spaced apart from one another, by means of which the scanning unit (4) may be aligned relative to the material measure (2), and **in that** these stop faces (11.10, 12.10) may be adjusted via the lever arrangement (11, 12) by means of a common adjusting element (13, 130).

6. Position measuring device according to Claim 5, **characterised in that** the material measure is an angle scale (2), which is rotatably mounted in a stator (3) about an axis of rotation (D), and on the stator (3) a centring collar (6) is arranged extending concentrically to the axis of rotation (D), against which the alignment device (10) bears by means of two stop faces (11.10, 12.10) and the lever arrangement (11, 12) is arranged between the adjusting element (13, 130) and the stop faces (11.10, 12.10) for displacing the stop faces (11.10, 12.10).

7. Position measuring device according to Claim 6, **characterised in that** the lever arrangement comprises two levers (11, 12) which may be pivoted in opposing directions by the action of the adjusting element (13, 130) respectively about a flexible joint (14, 15), one of the flexible joints (14, 15) being respectively arranged between the scanning unit (4) and one of the levers (11, 12).

8. Position measuring device according to Claim 7, **characterised in that** each of the two levers (11, 12) comprises a short lever arm (11.1, 12.1) extending from the flexible joint (14, 15) and a longer lever arm (11.2, 12.2) extending from the flexible joint (14, 15), the adjusting element (13, 130) acting on the longer lever arm (11.2, 12.2), and one of the stop faces (11.10, 12.10) being arranged on the shorter lever arm (11.1, 12.1).

9. Position measuring device according to one of Claims 1 to 4, **characterised in that** the alignment device (10) has a stationary part (20) to which the scanning unit (4) is adjustably coupled via flexible joints (25, 26), and the flexible joints (25, 26) may be displaced parallel to one another on the scanning unit (4) via the lever arrangement (11, 12).

10. Position measuring device according to Claim 9, **characterised in that** the lever arrangement consists of two levers (11, 12), one respective lever (11, 12) acting on one of the flexible joints (25, 26) of the scanning unit (4), and the two levers (11, 12) being able to be pivoted together via the adjusting element (13, 130).

11. Position measuring device according to Claim 10, **characterised in that** the two levers (11, 12) are coupled to a guide rod (21, 22), which converts the pivoting movement of the levers (11, 12) into a parallel movement of the flexible joints (25, 26) of the scanning unit (4).

12. Position measuring device according to Claim 11, **characterised in that** the guide rods (21, 22) are coupled to the scanning unit (4) via the respective flexible joint (25, 26) and are coupled to the lever (11, 12) via a further flexible joint (23, 24).

## Revendications

1. Dispositif de mesure de position comprenant :
- une mesure matérialisée (2) ;
- une unité d'exploration (4) pour l'exploration de la mesure matérialisée (2)
- un dispositif d'ajustage (10) comprenant un élément de positionnement (13, 130) pour le réglage de la position de l'unité d'exploration (4) par rapport à la mesure matérialisée (2), un mécanisme de démultiplication étant disposé entre l'élément de positionnement (13, 130) et l'unité d'exploration (4), lequel mécanisme transforme un mouvement de positionnement de l'élément de positionnement (13, 130) en un mouvement de positionnement plus court de l'unité d'exploration (4), **caractérisé en ce que**
- le mécanisme de démultiplication présente un dispositif à levier (11, 12) avec des articulations (14, 15, 18, 19, 21, 22, 23, 24) qui transforme le mouvement de positionnement de l'élément de positionnement (13, 130) en un mouvement de positionnement linéaire de l'unité d'exploration (4) par rapport à la mesure matérialisée (2).

2. Dispositif de mesure de position selon la revendication 1, **caractérisé en ce que** l'élément de positionnement (13,130) s'appuie simultanément sur deux leviers (11, 12) et chacun des deux leviers (11, 12) est fixé de façon à pouvoir basculer respectivement autour d'une articulation de flexion (14,15).

3. Dispositif de mesure de position selon la revendications 2, **caractérisé en ce que** les deux leviers (11,12) sont couplés l'un à l'autre au moyen d'une entretoise (17), sur laquelle s'applique l'élément de positionnement (13) commun, les deux leviers (11, 12) pouvant basculer dans le sens contraire lorsque l'élément de positionnement (13,130) est actionné.

4. Dispositif de mesure de position selon la revendication 3, **caractérisé en ce que** la traverse (17) est un élément de déformation qui est formé d'une seule pièce sur les deux leviers (11,12).

5. Dispositif de mesure de position selon l'une quelconque des revendications précédentes, **caractérisé en ce que** le dispositif d'ajustage (10) présente des surfaces de butée (11.10,12.10) espacées les unes des autres, avec lesquelles l'unité d'exploration (4) peut être orientée par rapport à la mesure matérialisée (2) et **en ce que** ces surfaces de butée(11.10, 12.10) peuvent être déplacées par le biais du dispositif à levier (11,12) au moyen d'un élément de positionnement (13,130) commun

6. Dispositif de mesure de position selon la revendication 5 **caractérisé en ce que** la mesure matérialisée est une division angulaire (2) qui est fixée dans un stator (3) de façon à pouvoir tourner autour d'un axe de rotation (D) et une collerette de centrage (6) agencée de façon concentrique par rapport à l'axe de rotation (D) est disposée sur le stator (3), sur laquelle le dispositif d'ajustage (10) s'applique au moyen de deux surfaces de butée (11.10, 12.10) et le dispositif à levier (11,12) est disposé entre l'élément de positionnement (13,130) et les surfaces de butée (11.10, 12.10) pour le déplacement des surfaces de butée (11.10, 12.10).

7. Dispositif de mesure de position selon la revendication 6, **caractérisé en ce que** le dispositif à levier comporte deux leviers (11,12) qui peuvent basculer dans le sens contraire respectivement autour d'une articulation de flexion (14, 15) par l'effet de l'élément de positionnement (13, 130), l'une des articulations de flexion (14, 15) étant disposée respectivement entre l'unité de balayage (4) et l'un des leviers (11, 12).

8. Dispositif de mesure de position selon la revendication 7, **caractérisé en ce que** chacun des deux leviers (11, 12) présente un bras de levier (11.1, 12.1) court partant de l'articulation de flexion (14, 15) et un bras de levier (11.2, 12.2) plus long partant de l'articulation de flexion (14, 15), l'élément de positionnement (13,130) s'appliquant sur le bras de levier (11.2, 12.2) plus long et l'une des surfaces de butée (11.10, 12.10) étant disposée sur le bras de levier (11.1, 12.1) plus court.

9. Dispositif de mesure de position selon l'une quelconque des revendications 1 à 4, **caractérisé en ce que** le dispositif d'ajustage (10) présente une partie (20) fixe, sur laquelle l'unité d'exploration (4) est couplée de façon réglable au moyen d'articulations de flexion (25, 26) et les articulations de flexion (25, 26) peuvent être déplacées parallèlement entre elles sur l'unité d'exploration (4) au moyen du dispositif à levier (11, 12).

10. Dispositif de mesure de position selon la revendication 9, **caractérisé en ce que** le dispositif à levier comprend deux leviers (11, 12), à chaque fois un levier (11, 12) s'appliquant sur l'une des articulations de flexion (25, 26) de l'unité de l'exploration (4), et les deux leviers (11, 12) peuvent basculer ensemble au moyen de l'élément de positionnement (13, 130).

11. Dispositif de mesure de position selon la revendication 10, **caractérisé en ce que** les deux leviers (11, 12) sont couplés avec un bras oscillant (21, 22) qui transforme le mouvement de basculement des leviers (11, 12) en un mouvement parallèle des articulations de flexion (25, 26) de l'unité d'exploration (4).

12. Dispositif de mesure de position selon la revendication 11, **caractérisé en ce que** les bras oscillants (21, 22) sont couplés respectivement au moyen de l'articulation de flexion (25, 26) sur l'unité d'exploration (4) et sont couplés au moyen d'une autre articulation de flexion (23, 24) sur le levier (11, 12).
